# EUROPÄISCHE PATENTSCHRIFT

(11) **EP 3 027 489 B1**
(45) Veröffentlichungstag und Bekanntmachung des Hinweises auf die Patenterteilung: **13.09.2017**
(21) Anmeldenummer: 14742182.0
(22) Anmeldetag: 16.07.2014
(51) Int. Cl.: B62D 21/15, B62D 25/02, B62D 25/04, B62D 29/00, B62D 29/04

(54) **PROFILLEISTE EINER FAHRZEUGKAROSSERIE**
PROFILE STRIP OF A VEHICLE BODY
BAGUETTE PROFILÉE D'UNE CARROSSERIE DE VÉHICULE

(30) Priorität: 29.07.2013 DE 102013214787
(43) Veröffentlichungstag der Anmeldung: 08.06.2016
(73) Patentinhaber: Bayerische Motoren Werke Aktiengesellschaft, 80809 München (DE)
(72) Erfinder: SCHNAUFER, Thomas, 82386 Oberhausen (DE); KOCH, Andre, 80333 München (DE)
(86) Internationale Anmeldenummer: PCT/EP2014/065224
(87) Internationale Veröffentlichungsnummer: WO 2015/014617

(56) Entgegenhaltungen:
- DE-A1- 10 100 325
- DE-A1-102010 012 715
- US-A1- 2003 184 126
- US-B1- 6 467 834

## Beschreibung

Die Erfindung betrifft eine Profilleiste einer Fahrzeugkarosserie, die mit mindestens einem Schalenbauteil aus faserverstärktem Kunststoff gestaltet ist, bei der die Profilleiste in einer Biegerichtung auf Biegung belastet ist und das Pultrusionsbauteil in Biegerichtung neben dem Schalenbauteil angeordnet ist, und bei der das Pultrusionsbauteil mit einer Außenschale und mindestens einem daran innen angekoppelten Innensteg gestaltet ist. Eine ähnliche Profilleiste ist aus DE 10 2010 012 715 A1 bekannt. Die Erfindung betrifft ferner eine Verwendung einer derartigen Pröfilleiste an einer Fahrzeugkarosserie.

Fahrzeugkarosserien moderner Fahrzeuge sind inzwischen mit faserverstärktem Kunststoff gestaltet. Die zugehörigen Profilleisten sind aus Gewichtsgründen möglichst dünnwandig und weisen dann entsprechend eine geringe Steifigkeit und Stabilität auf. Für solche Profilleisten muss also insbesondere ein Optimum zwischen der zur Verfügung gestellten Stützkraft und dem dazu benötigten Gewicht gefunden werden.

Erfindungsgemäß ist eine Profilleiste einer Fahrzeugkarosserie geschaffen, wobei die Profilleiste mit mindestens einem Schalenbauteil aus faserverstärktem Kunststoff und mindestens einem Pultrusionsbauteil gestaltet ist, bei der die Profilleiste in einer Biegerichtung auf Biegung belastet ist und das Pultrusionsbauteil in Biegerichtung neben dem Schalenbauteil angeordnet ist, und bei der das Pultrusionsbauteil mit einer Außenschale und mindestens einem daran innen angekoppelten Innensteg gestaltet ist. Gemäß der Erfindung erstreckt der mindestens eine Innensteg sich in Biegerichtung und das mindestens eine Schalenbauteil weist zusätzliche innere Rippen auf, die sich ebenfalls in Biegerichtung erstrecken.

Unter Schatenbauteil aus faserverstärktem Kunststoff ist ein Bauteil zu verstehen, das aus mindestens einer Schale aus Kunststoff als Matrix, insbesondere Kunstharz in Form von Polyesterharz oder Epoxidharz, und darin eingebetteten Verstärkungsstoffen bzw. Verstärkungsfasern gestaltet ist. Als Matrix können sowohl duroplastische als auch thermoplastische Polymere eingesetzt werden. Als duroplastische Matrixsysteme werden die relativ preisgünstigen Polyesterharze, Vinylesterharze und Epoxidharze verwendet. Es können auch thermoplastische Faserverbundwerkstoffe hergestellt werden. Als Matrixsysteme kommen dann vorwiegend Polyamide. Polypropylene und Polyethylene zum Einsatz. Als Verstärkungsmaterial kommen vorwiegend synthetische Fasern aus Glas, Kohlenstoff und Aramid zum Einsatz, die als Rovings, Gelege, Gewebe oder Vliese verwendet werden können. Damit können die Eigenschaften des schalenförmigen Bauteils sowohl absolut als auch in ihrem Verhältnis zwischen dessen Längs- und Querrichtung in einem weiten Bereich variiert werden.

Unter Pultrusionsbauteil ist ein Bauteil zu verstehen, das mittels eines Pultrusionsverfahrens hergestellt worden ist. Pultrusionsverfahren werden auch als Strängpressverfahren bezeichnet. Eine Pultrusionsanlage umfasst ein Faserregal, Faserführungen, eine Imprägniereinrichtung, Formgebungs- oder Härtungswerkzeug, eine Ziehvorrichtung und eine Ablängeinheit. Im Pultrusionsverfahren werden die Faserrovings über Faserführungen aus einem mehrstöckigen Spulenlager in das Harzbad, die Imprägniereinrichtung, geführt. Die Fasern durchlaufen mehrere Vorformstationen, sodass sie an die gewünschte Profilform herangeführt werden. An den Faserführungen können Matten, Gewebe, Gelege oder Vliese in den Prozess integriert werden, um die mechanischen Eigenschaften gegenüber der einer rein unidirektionalen Verstärkung, wie sie durch Fasern erreicht wird, anzupassen/zu optimieren.

Grundsätzlich kann zwischen den folgenden drei Verfahren zur Harzimprägnierung von Verstärkungsfasern unterschieden werden: Wannenverfahren, Durchziehverfahren und Einspritzverfahren.

Beim Wannenverfahren werden die Verstärkungsfasern von oben eingeführt und durch ein offenes Harzbad gezogen, in welchem die Fasern durch Lochblenden umgelenkt werden. Dieses Verfahren ist das gängigste zur Herstellung pultrudierter Profile, insbesondere mit einfachen Querschnitten. Die Imprägnierung und Tränkung findet in einem offenen Harzbad statt, durch welches die trockenen Fasern gezogen Werden. Die Umlenkung der Fasern in und aus dem Harzbad erfolgt durch Führungsblenden.

Das Durchziehverfahren wird insbesondere bei der Herstellung von Profilen mit geometrisch komplexen Querschnitten verwendet. Die Verstärkungsfasern werden ohne Umlenkung durch das Harzbad geführt, sodass die Imprägniereinheit horizontal durchlaufen wird. An der Ein- und Austrittsseite des Harzbades befinden sich Vorformstationen, die der späteren Profilform gleichen. Die durch die Faserführungen abgestrichene Matrix wird unter der Imprägniereinheit mit Hilfe einer Wanne aufgefangen.

Beim Einspritzverfahren werden die Verstärkungsfasern ohne Umlenkung durch das Imprägnierwerkzeug geführt. Dieses Werkzeug hat die Form des herzustellenden Profils und weitet sich im Inneren auf. In diesem Hohlraum wird das Harz von beiden Seiten quer zur Faserrichtung eingespritzt. Dieses Verfahren wird vorliegend besonders bevorzugt

Nach dem Ende der Harzimprägnierung wird erfindungsgemäß bevorzugt dann noch eine letztendliche Formgebung der hergestellten Profilleiste und/oder eine Heißaushärtung bei Temperaturen zwischen 100 °C bis 200 °C statt.

Die fertige Profilleiste wird durch eine sich anschließende Ziehvorrichfung, z. B. in Form eines Raupenabzugs oder von pneumatischen Greifern, kontinuierlich gefördert und mit einer konstanten Geschwindigkeit aus dem Werkzeug gezogen (daher auch der englische Name Pultrusion aus "pull" - ziehen und "extrusion" - Durchdrücken). Bevorzugt wird eine Prozessgeschwindigkeit von 0,1 m/min bis 1,2 m/min.

Erfindungsgemäß bevorzugt wird ferner die so genannte Radius-Pultrusion. Im Gegensatz zum Standardverfahren wird bei diesem Verfahren die Form, deren Kavität dem Verlauf des gewünschten Profils entspricht, schrittweise über das entstehende Profil bewegt. Der in diesem Verfahren nur einfach vorhandene Greifer hält das Profil während der Vorwärtsbewegung der Form fest und gibt das entstandene Profil bei der Rückwärtsbewegung der Form wieder frei, wie in der Abbildung Prozessablauf der Radiuspultrusion gezeigt.

Mit diesem Verfahren und seinen Varianten ist es möglich, fast beliebig gekrümmte Profile und z. B. auch schraubenförmige Profile herzustellen.

Die Profilleiste ist an der zugehörigen Fahrzeugkarosserie in einer Biegerichtung auf Biegung belastet und das Pultrusionsbauteil ist dann in Biegerichtung neben dem Schalenbauteil angeordnet. Das Pultrusionsbauteil ist ferner mit einer Außenschale und mindestens einem daran innen angekoppelten Innensteg gestaltet, wobei der mindestens eine Innensteg sich in Biegerichtung erstreckt. Die derartigen Ausgestaltungen sind insbesondere zur gewichtssparenden Erhöhung der Steifigkeit einer speziell auf Biegung beanspruchten Profilleiste vorteilhaft.

Zur Erhöhung der Steifigkeit der erfindungsgemäßen Konstruktion kann insbesondere ferner gegebenenfalls das Schalenbauteil und/oder das Pultrusionsbauteil mit Schaum gefüllt werden. Das Füllen mit Schaum erfolgt insbesondere vorteilhaft nach der Herstellung der Bauteile in einem separaten Fertigungsschritt.

Ferner kann vorteilhaft das Pultrusionsbauteil mit dem Schalenbauteil flächig verklebt sein. Die derartige Flächenklebung koppelt die beiden Bauteile derart aneinander, dass ein Komposit-Bauteil, geschaffen wird, welches entsprechend hohe Festigkeitswerte aufweist.

Die Erfindung ist ferner speziell auf eine Verwendung eine derartigen erfindungsgemäßen Profilleiste an einer Fahrgastzelle einer Fahrzeugkarosserie gerichtet. Dabei ist besonders bevorzugt mit der Profilleiste, ein Schweller der Fahrgastzelle gebildet. Dabei Kahn insbesondere der zur Verfügung stehende Raum an der Fahrgastzelle optimal genutzt werden, indem das Pultrusionsbauteil die gesamte Höhe des Schalenbauteils überdecken gestaltet wird.

Nachfolgend werden Ausführungsbeispiele der erfindungsgemäßen Lösung anhand der beigefügten schematischen Zeichnungen näher erläutert. Es zeigt:
- Fig. 1: einen Querschnitt einer Profilleiste einer Fahrzeugkarosserie gemäß dem Stand der Technik,
- Fig. 2: einen Querschnitt eines ersten Ausführungsbeispiels einer Profilleiste einer Fahrzeugkarosserie gemäß der Erfindung,
- Fig. 3: eine geschnittene perspektivische Ansicht der Profilleiste gemäß Fig. 2,
- Fig. 4: einen Querschnitt eines zweiten Ausführungsbeispiels einer Profilleiste einer Fahrzeugkarosserie gemäß der Erfindung und
- Fig. 5: eine geschnittene perspektivische Ansicht der Profilleiste gemäß Fig. 4.

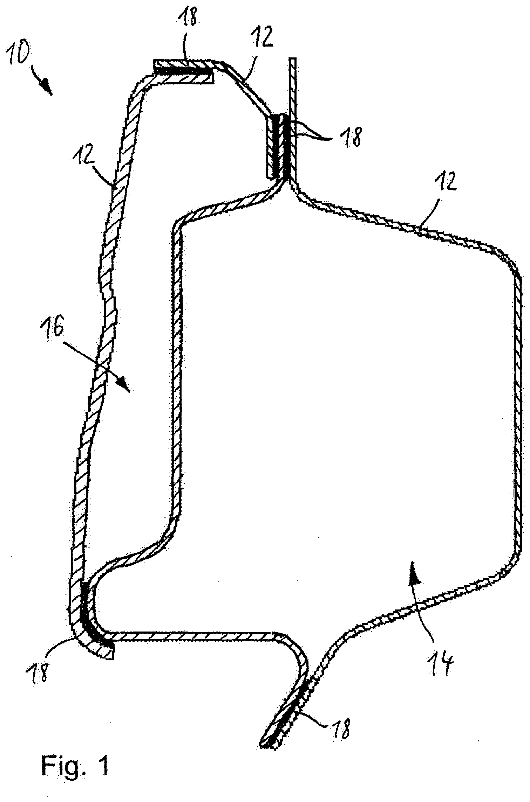

In Fig. 1 ist eine Profilleiste 10 in Gestalt eines Schwellers einer Fahrgastzelle einer Fahrzeugkarosserie dargestellt, die aus insgesamt vier verschieden gekrümmten, länglichen Schalenbauteilen 12 aus faserverstärktem Kunststoff gebildet ist. Die Schalenbauteile 12 sind jeweils aus Kunstharz mit zugehörigen Fasereinlagen als flächige Elemente bzw. Schalen gestaltet. Sie sind derart im Wesentlichen jeweils U-förmig bzw. L-förmig gekrümmt, dass mit ihnen insgesamt zwei nebeneinander angeordnete, geschlossene Hohlprofile, ein bezogen auf Fig. 1 rechtes, erstes Hohlprofil 14 und ein sich links daneben befindendes, zweites Hohlprofil 16 gebildet sind.

Um die jeweils geschlossenen Hohlprofile 14 und 16 zu bilden, sind die Schalenbauteile 12 miteinander an Randbereichen mittels Klebeflächen 18 miteinander verklebt.

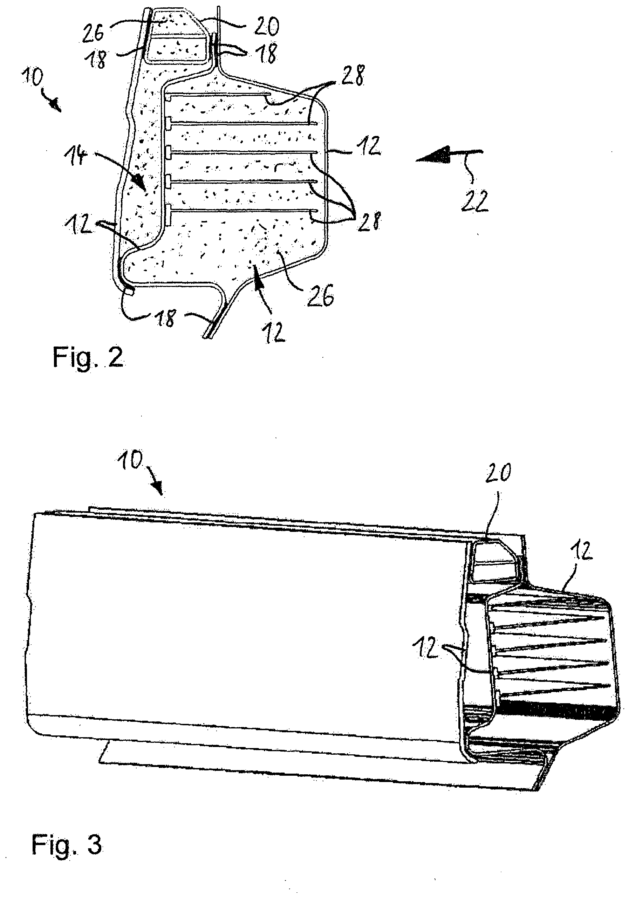

Die Fig. 2 bis 5 zeigen Ausführungsbeispiele von Profilleisten 10, die ebenfalls ein erstes Hohlprofil 14 und ein daneben angeordnetes Hohlprofil 16 aufweisen. Dabei ist das erste Hohlprofil 14 wiederum aus zwei Schalenbauteilen 12 gebildet. Diese Schälenbauteile 12 sind einzeln im Wesentlichen U-förmig gestaltet und mit ihren offenen Seiten derart aneinandergelegt und ihren Randbereichen an Klebeflächen 18 derart verklebt, dass das erläuterte Hohlprofil 14 entsteht.

Das zweite Hohlprofil 16 der Ausführungsbeispiele gemäß Fig. 2 bis 5 ist hingegen nicht allein mit Schalenbauteilen 12 gebildet, sondern umfasst insbesondere auch jeweils ein Pultrusionsbauteil 20.

Bei dem Ausführungsbeispiel gemäß Fig. 2 und 3 ist mit diesem Pultrusionsbauteil 20 nur der, bezogen auf die Fig., oberste Bereich des Hohlprofils 16 gestaltet, während der Rest des Hohlprofils 16 ebenfalls mit einem Schalenbauteil 12 gestaltet ist, das dazu oben an das Pultrusionsbauteil 20 und unten an ein Schalenbauteil 12 des ersten Hohlprofils 14 geklebt ist. Das Pultrusionsbauteil 20 gemäß Fig. 2 und 3 ist dabei seinerseits mittels einer Klebefläche 18 im, bezogen auf die Fig., oberen Randbereich des ersten Hohlprofls 14 an das dortige Schalenbauteil 12 geklebt.

Die derartige Profilleiste 10 ist speziell dazu ausgelegt mit einer Biegekraft in einer Biegerichtung 22 belastet zu werden, die vorliegend eine Querkraft auf die Fahrgastzelle bei einem Seitenaufprall darstellt. Dabei weist das Pultrusionsbauteil 22 zu seiner Versteifung einen Innensteg 24 auf, der sich im Wesentlichen quer durch dessen Hohlraum in Biegerichtung 22 erstreckt.

Wie insbesondere in Fig. 2 veranschaulicht ist, können zur weiteren Versteifung der derartigen Profilleiste 10 sowohl das Hohlprofil 14 als auch das Hohlprofil 16 mit einem Schaum 26 gefüllt sein und zumindest eines der Hohlprofile, vorliegend das Hohlprofil 14 können zusätzliche innere Rippen 28 aufweisen, die sich insbesondere ebenfalls in Biegerichtung 22 erstrecken.

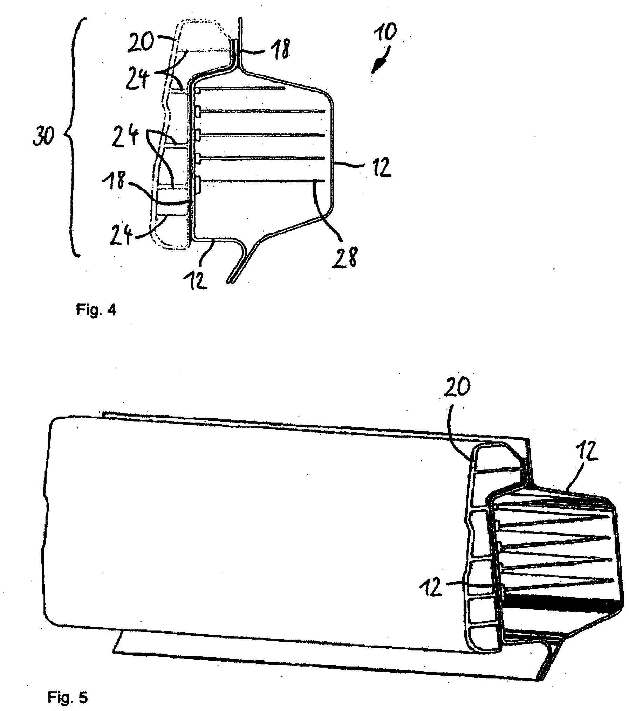

In Fig. 4 und 5 ist ein Ausführungsbeispiel einer erfindungsgemäßen Profilleiste 10 veranschaulicht, bei der das zweite Hohlprofil 16 vollständig von einem Pultrusionsbauteil 20 gebildet ist, welches sich über die gesamte Höhe 30 des sich daneben befindenden Schalenbauteils 12 erstreckt. Das derartige Pultrusionsbauteil 20 ist über seine gesamte Höhe hinweg mittels einer Klebefläche 18 an dem benachbarten Schaleribauteil 12 angeklebt und weist in seinem Inneren insgesamt fünf Innenstege 24 auf, die sich parallel zueinander sämtlich in Biegerichtung 22 erstrecken.

### Bezugszeichenliste

- 10: Profilleiste
- 12: Schalenbauteil
- 14: erstes Hohlprofil
- 16: zweites Hohlprofil
- 18: Klebefläche
- 20: Pultrusionsbauteil
- 22: Biegerichtung
- 24: Innensteg
- 26: Schaum
- 28: Rippe
- 30: Höhe des Schalenbauteils

## Patentansprüche

1. Profilleiste (10) einer Fahrzeugkarosserie, wobei die Profilleiste (10) mit mindestens einem Schalenbauteil (12) aus faserverstärktem Kunststoff und mindestens einem Pultrusionbauteil (20) gestaltet ist, bei der die Profilleiste (10) in einer Biegerichtung (22) auf Biegung belastet ist und das Pultrusionsbauteil (20) in Biegerichtung (22) neben dem Schalenbauteil (12) angeordnet ist, und bei der das Pultrusionsbauteil (20) mit einer Außenschale und mindestens einem daran innen angekoppelten Innensteg (24) gestaltet ist,
**dadurch gekennzeichnet, dass** der mindestens eine Innensteg (24) sich in Biegerichtung (22) erstreckt und das mindestens eine Schalenbauteil (12) zusätzlich innere Rippen (28) aufweist, die sich ebenfalls in Biegerichtung (22) erstrecken.

2. Profilleiste nach Anspruch 1,
bei der das Schalenbauteil (12) und/oder das Pultrusionsbauteil (20) mit Schaum (26) gefüllt ist.

3. Profilleiste nach Anspruch 1 oder 2,
bei der das Pultrusionsbauteil (20) mit dem Schalenbauteil (12) flächig verklebt ist.

4. Verwendung einer Profilleiste (10) nach einem der Ansprüche 1 bis 3 an einer Fahrgastzelle einer Fahrzeugkarosserie.

5. Verwendung nach Anspruch 4,
bei der mit der Profilleiste (10) ein Schweller der Fahrgastzelle gebildet wird.

6. Verwendung nach Anspruch 7,
bei der das Pultrusionsbauteil (20) die gesamte Höhe des Schalenbauteils (12) überdeckend gestaltet wird.

## Claims

1. A profile strip (10) of a vehicle body, wherein the profile strip (10) is formed with at least one shell component (12) made of fibre-reinforced plastics material and with at least one pultrusion component (20), in which the profile strip (10) is placed under bending stress in a bending direction (22) and the pultrusion component (20) in the bending direction (22) is arranged next to the shell component (12), and in which the pultrusion component (20) is formed with an outer shell and at least one internal web (24) internally coupled thereto,
**characterised in that** the at least one internal web (24) extends in the bending direction (22) and the at least one shell component (12) additionally has internal ribs (28) which likewise extend in the bending direction (22).

2. A profile strip according to Claim 1,
in which the shell component (12) and/or the pultrusion component (20) is filled with foam (26).

3. A profile strip according to Claim 1 or Claim 2,
in which the pultrusion component (20) is glued to the shell component (12) in surface-to-surface contact.

4. Use of a profile strip (10) according to one of Claims 1 to 3 on a passenger cell of a vehicle body.

5. Use according to Claim 4,
in which a sill of the passenger cell is formed with the profile strip (10).

6. Use according to Claim 4,
in which the pultrusion component (20) is formed covering the entire height of the shell component (12).

## Revendications

1. Baguette profilée (10) d'une carrosserie de véhicule, cette baguette profilée (10) comportant au moins un élément de coquille (12) en un matériau synthétique renforcé par des fibres et au moins un élément de pultrusion (20), la baguette profilée (10) étant sollicitée en flexion dans une direction de flexion (22), et l'élément de pultrusion (20) étant situé dans la direction de flexion (22), à proximité de l'élément de coquille (12) et étant équipé d'une coquille externe et d'au moins une traverse interne (24) couplée à celle-ci intérieurement,
**caractérisée en ce que**
la traverse interne (24) s'étend dans la direction de flexion (22), et l'élément de coquille (12) comporte en outre des nervures internes (28) qui s'étendent également dans la direction de flexion (22).

2. Baguette profilée conforme à la revendication 1,
dans laquelle l'élément de coquille (12) et/ou l'élément de pultrusion (20) est(ont) rempli(s) d'une mousse (26).

3. Baguette profilée conforme à la revendication 1 ou 2,
dans laquelle l'élément de pultrusion (20) est collé à plat sur l'élément de coquille (12).

4. Utilisation d'une baguette profilée (10) conforme à l'une des revendications 1 à 3,
sur un habitacle d'une carrosserie de véhicule.

5. Utilisation conforme à la revendication 4,
dans laquelle la baguette profilée (10) forme un seuil de porte de l'habitacle.

6. Utilisation conforme à la revendication 7,
dans laquelle l'élément de pultrusion (20) est conformé pour recouvrir la totalité de la hauteur de l'élément de coquille (12).
